# EUROPÄISCHE PATENTSCHRIFT

(11) **EP 1 715 959 B1**
(45) Veröffentlichungstag und Bekanntmachung des Hinweises auf die Patenterteilung: **31.07.2019**
(21) Anmeldenummer: 05714960.1
(22) Anmeldetag: 11.02.2005
(51) Int. Cl.: B05D 1/26, B29C 41/12, B05C 19/04, B05C 19/06, B29C 64/205, B29C 64/153, B29C 41/52

(54) **VERFAHREN UND VORRICHTUNG ZUM AUFTRAGEN VON FLUIDEN**
METHOD AND DEVICE FOR APPLYING FLUIDS
PROCEDE ET DISPOSITIF POUR APPLIQUER DES FLUIDES

(30) Priorität: 19.02.2004 DE 102004008168
(43) Veröffentlichungstag der Anmeldung: 02.11.2006
(73) Patentinhaber: voxeljet AG, 86316 Friedberg (DE)
(72) Erfinder: EDERER, Ingo, 82269 Geltendorf (DE); KASHANI-SHIRAZI, Kaveh, 86150 Augsburg (DE)
(74) Vertreter: Helbig, Christian
(86) Internationale Anmeldenummer: PCT/DE2005/000237
(87) Internationale Veröffentlichungsnummer: WO 2005/080010

(56) Entgegenhaltungen:
- EP-A2- 1 377 389
- WO-A-03/086726

## Beschreibung

Die vorliegende Erfindung bezieht sich auf ein Verfahren und eine Vorrichtung zum Auftragen von Partikelmaterialien auf einen zu beschichteten Bereich gemäß der Ansprüche 1 und 9.

Weiterhin betrifft die Erfindung auch die Verwendung einer solchen Vorrichtung und eines solchen Verfahrens.

Aus der PCT-Veröffentlichungsschrift WO 95/18715 ist es bekannt, in einem Verfahren zur Herstellung dreidimensionaler Objekte aus Partikelmaterial, wie einem Rapid-Prototyping-Verfahren, einen Beschichter für das Partikelmaterial zu verwenden, der in Form eines nach unten geöffneten Trichter ausgebildet ist. Dieser Trichter vibriert während des Beschichtungsvorgangs quer zur Verschiebungsrichtung des Beschichters und parallel zur Beschichtungsebene. Mit einem Beschichter, wie er in diesem Dokument beschrieben wird, kann ein ungehindertes Austreten des Partikelmaterials während des Beschichtens gewährleistet und eine Verdichtung desselben erzielt werden.

Dieser Art des Beschichtens weist jedoch den Nachteil auf, dass der Partikelaustritt nicht schaltbar ist, das heißt, dass auch bei einem deaktivierten Vibrationsmechanismus Pulver aus dem Beschichter austritt, sofern dieser nicht anderweitig von unten verschlossen wird.

Daneben ist es aus der DE 102 16 013 A1 bekannt, dass bei einem Verfahren zur Herstellung von dreidimensionalen Objekten aus Partikelmaterial zur Auftragung von Partikelmaterial ein nach unten geöffneter, mit einem schwingenden Nivellierelement verbundener Behälter eingesetzt wird.

Dabei ist ein wesentlicher Vorteil dieser Vorrichtung, dass der Pulverausstoß gesteuert erfolgt. Die Weite des Spaltes ist so eingestellt, dass bei ruhendem Beschichter das Pulver aufgrund von gebildeten Partikelbrücken über den Spalt am Austritt gehindert wird und erst beim Schwingen des Beschichters Partikelmaterial aus dem Spalt heraustritt.

Für sehr feine oder/und sehr rieselfähige Pulvermaterialien, beispielsweise Fluide mit einer Korngröße < 150 µm oder Pulver, die in der Mehrheit aus runden Partikeln bestehen erweist sich dieses Beschichten jedoch als sehr aufwendig, da der Spalt sehr fein gewählt werden muss, um ein Ausfließen des Partikelmaterials bei ruhendem Beschichter zu erzielen, da solche Materialen weniger zur Ausbildung von Partikelbrücken neigen.

Dies erfordert daher eine exakte Justierung der Spaltbreite zum Erzielen des Effektes der genannten Erfindung. Weiterhin ist auch eine konstante Spaltbreite über die gesamte Breite eines Beschichters notwendig. Dies erfordert eine sehr genaue Justierung. Aus fertigungstechnischen, Gründen ist dies jedoch kaum möglich beziehungsweise sehr aufwendig.

EP 1 377 389 A2 offenbart einen Vorratsbehälter mit Schüttkegelverschluss.

Es ist daher Aufgabe der vorliegenden Erfindung, ein Verfahren, eine Vorrichtung sowie eine Verwendung der Vorrichtung bereitzustellen mit denen eine kontrollierte Dosierung und Auftrag von beliebigen und damit auch feinen oder/und sehr rieselfähigen Pulvern möglich ist. Erfindungsgemäß wird diese Aufgabe gelöst mit einem Verfahren zum Auftragen von Partikelmaterialien (5) auf einen zu beschichtenden Bereich (4), wobei in Vorwärtsbewegungsrichtung des Beschichters (1) gesehen, das Partikelmaterial (5) auf den zu beschichtenden Bereich aufgetragen wird und danach ein Nivellierelement (14) über dem aufgetragenen Partikelmaterial (5) verfahren wird, wobei das Partikelmaterial (5) aus einem mit einer Öffnung (11) versehenen Dosiersystem zugeführt wird, das zumindest beim Auftragen des Partikelmaterials eine Schwingung ausführt,
dadurch gekennzeichnet, dass die Öffnung (11) seitlich, das heißt senkrecht zur Beschichtungsrichtung gesehen mit einem Winkel α und in Fahrtrichtung vor und oberhalb der Abstreifklinge (14) am Dosiersystem vorgesehen ist und bei Stillstand des Dosiersystems durch Schüttkegelbildung des Partikelmaterials (5) in der Öffnung (11) verschlossen und bei aktivierter Schwingung der Schüttkegel zusammenbricht und Partikelmaterial wieder ausgefördert wird sowie durch eine Vorrichtung zum Auftragen von Partikelmaterialien (5), insbesondere bei einem Verfahren wie hierin beschrieben, auf einen zu beschichtenden Bereich (4), wobei ein Nivellierelement (14) und in Vorwärtsbewegungsrichtung des Nivellierelementes (14) gesehen eine Dosiervorrichtung vorgesehen ist, mittels der auf den zu beschichtenden Bereich Partikelmaterial aufgetragen werden kann und die Klinge (14) über dem aufgetragenen Partikelmaterial (5) verfahrbar ist, wobei die Dosiervorrichtung mit einer Öffnung (11) versehenen ist und eine Schwingung ausführen kann,
wobei die Öffnung (11) derart vorgesehen ist, dass sie bei Stillstand des Dosiersystems durch Schüttkegelbildung des Partikelmaterials (5) in der Öffnung (11) verschließbar ist und bei aktivierter Schwingung der Schüttkegel zusammenbricht und Partikelmaterial wieder ausförderbar ist, dadurch gekennzeichnet, dass die Öffnung (11) seitlich, das heißt senkrecht zur Beschichtungsrichtung gesehen mit einem Winkel α und in Fahrtrichtung vor und oberhalb der Abstreifklinge (14) am Dosiersystem vorgesehen ist.

Das Dosiersystem weist einen mit einer Öffnung versehenen schwingenden Behälter auf, wobei die Öffnung derartig ausgebildet ist, dass bei ruhendem Dosiersystem auf Grund von Bildung eines Schüttkegels in der Öffnung kein Material ausfließt und bei aktiviertem Schwingmechanismus der Schüttkegel zusammenbricht und Partikelmaterial ausgefördert wird.

Das Nivellierelement kann hierbei als Klinge ausgebildet sein, die entweder nur starr über dem Fluid verfahren wird oder auch schwingt, gegebenenfalls mit dem Dosiersystem. Unter Vorwärtsbewegung der Klinge ist die Verfahrrichtung des Beschichters beim Beschichtungsschritt zu verstehen. Ist eine Beschichtung in zwei oder mehr Verfahrrichtungen des Beschichters möglich, so kann die Vorwärtsbewegung auch in mehreren Richtungen möglich sein.

Als Nivellierelement eignet sich jedoch ebenso eine Walze (diese Alternative fällt jedoch nicht unter die Ansprüche) mit einer Achse parallel zur Oberfläche des zu beschichtenden Bereichs und senkrecht zur Beschichtungsrichtung. Die Walze kann starr stehen, oder aber um ihre eigene Achse rotieren. Die Drehrichtung ist Vorteilhafterweise entgegen der Vorwärtsfahrtrichtung des Beschichters gerichtet, um das Fluid aus dem Spalt zwischen Walze und Pulverbettoberfläche zu fördern.

Das Fluid wird gemäß der vorliegenden Erfindung aus einem mit einer Öffnung versehenen Dosiersystem aufgetragen, wobei die Öffnung, bildlich beschrieben, in Richtung senkrecht zum zu beschichtenden Bereich gesehen mit einem Winkel α dazu vorgesehen ist. Man könnte umgangssprachlich auch sagen, es ist eine Art "seitliche" Öffnung vorgesehen. Es erfolgt also kein Auftrag in Richtung senkrecht auf den zu beschichtenden Bereich.

Die Öffnung wird bei ruhendem Behälter auf Grund der Bildung eines Schüttkegels in der Öffnung vom Partikelmaterial selbst blockiert. Es fließt also nicht mehr unkontrolliert, wie bei Verfahren des Standes der Technik, beim Stillstand des Beschichters weiter aus, sondern wird durch die erfindungsgemäße Anordnung der Öffnung beim Stillstand des Beschichters zurückgehalten. Die Öffnung kann dabei jede dem Verfahren angepasste Breite aufweisen. Soll sich ein Bauteil im Wesentlichen über die gesamte Breite des zu beschichtenden Bereichs erstrecken, so erstrecken sich in vorteilhafter Weise auch der Beschichter und die Öffnung im Wesentlichen über dessen gesamte Breite. Es wären aber auch durchaus eine und/oder mehrere kleinere Öffnungen möglich.

Die Schwingung des Dosiersystems kann gemäß der vorliegenden Erfindung jeder Richtung, horizontal oder/und vertikal erfolgen. Besonders gute Ergebnisse konnten erzielt werden, wenn die Schwingung sowohl vertikale als auch horizontale Komponenten enthält. Insbesondere hat sich eine Schwingung nach Art einer Drehbewegung als vorteilhaft erwiesen.

Besonders gute Beschichtungsergebnisse konnten mit einem erfindungsgemäßen Verfahren erreicht werden, wenn das Nivellierelement ebenso beim Überfahren des aufgetragenen Fluids schwingt. Bei einer besonders bevorzugten Ausführungsform der vorliegenden Erfindung schwingt das Nivellierelement mit dem Dosiersystem mit.

Bei einer derartigen Ausführung der vorliegenden Erfindung kann die Verdichtung des Fluids durch zwei Effekte erzielt werden.

Durch die Schwingung beziehungsweise Vibrationen des Behälters und des Fluids sortieren sich die Partikel des zu beschichtendem Materials zu einer höheren Packungsdichte. Schwingt zudem das Nivellierelement in horizontaler und/oder vertikaler. Richtung, erreicht man durch die Bewegung zusätzlich eine Verdichtung des Fluids unter dem Nivellierelement.

Jedoch muss beachtet werden, dass eine zu starke, auf diese Weise erzielte Verdichtung des Partikelmaterials zu einer Bewegung im Pulverbett über die aktuelle Schicht hinaus führen kann und somit zu einer Zerstörung der darin gedruckten Struktur führt.

Dadurch, dass gemäß der vorliegenden Erfindung das Partikelmaterial schon vor der Beschichtung im Dosiersystem durch die Schwingung kompaktiert wird, also vor der Auslegung der Schicht stattfindet, kann die Verdichtung durch das Nivellierelement sehr schonend durchgeführt werden. Eine Beschädigung des zu beschichtenden Bereichs wird dadurch vermieden.

Die Verdichtung des Pulverbetts ist über den zu beschichtenden Bereich im wesentlichen homogen und nicht abhängig von der Verfahrrichtung des Beschichters, wie dies bei den Verfahren des Standes der Technik der Fall ist. Dadurch ist es möglich, in einmaliger Beschichterfahrt ein ausreichend gutes Beschichtungsergebnis zu erzielen. Dies führt zu einer Zeiteinsparung gegenüber den Verfahren des Standes der Technik, bei denen üblicherweise erst nach eine zweimaliger Beschichterfahrt ein ausreichend homogenes Beschichtungsergebnis erzielt werden kann.

Wenn es die weitere Ausgestaltung der Rapid-Prototyping-Vorrichtung erfordert, kann der Beschichter, beziehungsweise das Dosiersystem, nach einmaligem Überfahren des zu beschichtenden Bereichs mit erhöhter Geschwindigkeit und ohne Schwingbewegung und damit ohne Partikelausstoß über das Pulverbett in die Ausgangslage zurückgeführt werden. Das zuvor erzielte Beschichtungsergebnis wird dabei nicht beeinträchtigt. Gemäß einer bevorzugten Ausführungsform der vorliegenden Erfindung soll eine für die Beschichtung benötigte Dosiermenge des Fluids stets kleiner sein als ein im Behälter zur Verfügung stehendes Restvolumen des Fluids.

Durch das Schwingen des Dosiersystems, beziehungsweise des Behälters, kann das Fluid auf den zu beschichtenden Bereich dosiert werden. Bei Betätigung des Schwingmechanismus des Behälters wird das Fluid, beziehungsweise Partikelmaterial, im Behälter fluidisiert und fließt aus der Öffnung des Dosiersystems vor das Nivellierelement. Im Fall des Stillstandes des Schwingmechanismus verbleibt auf Grund der Bildung eines Schüttkegels in der Öffnung das Partikelmaterial im Behälter.

Die Drehbewegung der Schwingung des Beschichters, des Dosiersystems oder/und des Nivellierelementes wird bei dem erfindungsgemäßen Verfahren vorzugsweise über Exzenter erzielt, die auf einer Antriebsmotorwelle drehfest angebracht sind.

Die Kraftübertragung vom Exzenter auf den Beschichter, das Dosiersystem oder/und das Nivellierelement kann beispielsweise formschlüssig, also durch direktes Aufbringen eines Wälzlager auf den Exzenter dargestellt werden.

Dieses erfindungsgemäße Verfahren kann vorzugsweise mit einer Vorrichtung zum Auftragen von Fluiden auf einen zu beschichtenden Bereich durchgeführt werden, wobei ein Nivellierelement und in Vorwärtsbewegungsrichtung des Nivellierelements gesehen eine Dosiervorrichtung vorgesehen ist, mittels der auf den zu beschichtenden Bereich Fluid aufgetragen wird und beide über dem aufgetragenen Fluid verfahrbar sind, wobei die Dosiervorrichtung mit einer Öffnung versehenen ist und eine Schwingung ausführen kann. Die Öffnung ist gemäß der vorliegenden Vorrichtung derart vorgesehen, dass sie bei Stillstand des Dosiersystems durch Schüttkegelbildung des Fluids in der Öffnung verschlossen wird.

Gemäß einer bevorzugten Ausführungsform ist die Vorrichtung derart vorgesehen, dass das Dosiersystem, beziehungsweise der Behälter mit dem Nivellierelement verbunden ist.

Mit einer solchen bevorzugten Ausgestaltung der Erfindung ist es möglich, den Austritt des Partikelmaterials möglichst nahe am Nivellierelement zu legen. Darüber hinaus ist es so möglich, dass der Schwingmechanismus sowohl das Dosiersystem als auch das Nivellierelement antreibt.

Gemäß einer besonders bevorzugten Ausführungsform ist der Behälter des Dosiersystems im wesentlichen als ein Trichter ausgestaltet.

Bei der Betätigung des Schwingungsmechanismus des Behälters, also hier Trichters, wird das Partikelmaterial im Trichter fluidisiert und fließt aus der seitlichen Öffnung, die beispielsweise als Spalt ausgebildet sein kann, vor das Nivellierelement.

Im anderen Fall bleibt das Partikelmaterial im Behälter, wenn der Spalt (Länge und Höhe) entsprechend eingestellt ist, dass auf Grund der Bildung eines Schüttkegels in der Öffnung weiteres Material am Austreten gehindert wird. Der Trichter kann somit eine wesentlich größere Menge an Material mitführen als für die aktuelle Schicht nötig ist.

Damit ergibt sich zum einen eine wesentlich geringere Menge an Abfallmaterial. Zum anderen sinken die Anforderungen an das Zuführsystem, das das Partikelmaterial in den Trichter dosiert. Es muss lediglich für eine gleichmäßige Mengenverteilung im Behälter über die Beschichterbreite beziehungsweise die Breite der Öffnung gesorgt werden.

Eine mögliche Überfüllung beziehungsweise das zu starke Absinken des Vorrats im Trichter könnte vorzugsweise über einen Füllstandssensor überwacht werden und gegebenenfalls kann ein Auffüllen des Trichters aus dem Zuführsystem erfolgen. Dies ist beispielsweise nach einer Beschichterfahrt möglich.

Die das Dosiersystem und das Nivellierelement aufweisende Beschichtereinheit ist möglichst steif aufzubauen, um die auftretenden Schwingungen exakt übertragen zu können.

Die Öffnung des Behälters, vorzugsweise ein Spalt, ist vorteilhafterweise in Höhe und Länge so zu dimensionieren, das bei ruhendem Beschichter kein Partikelmaterial selbstständig aus dem Behälter beziehungsweise Trichter fließt und bei aktiviertem Vibrationsmechanismus gerade so viel Material ausgeworfen wird, wie zur Beschichtung notwendig ist. Die Auswurfmenge wird vorzugsweise über die Spalthöhe und Schwingungsamplitude des Dosiersystems reguliert.

Dabei hat sich herausgestellt, dass ein langer Spalt höher gewählt werden muss, um den gleichen Materialauswurf zu erzielen wie ein kurzer Spalt. Um einen gleichmäßigen Auswurf über die gesamte Beschichterbreite zu erzielen, ist es also sinnvoll, einen langen und hohen Spalt zu wählen. Auf diese Weise ist das Dosiersystem leichter einstellbar, toleranter gegenüber Schwankungen der Spaltdimension und unempfindlicher gegen Verstopfung des Spalts.

Wenn der Spalt zu groß eingestellt ist, häuft sich während des Betriebes des Beschichters Partikelmaterial vor der Klinge an. Um ein gutes Beschichtungsergebnis zu erhalten sollte die Menge vor dem Nivellierelement während des gesamten Beschichtungsvorgangs konstant bleiben.

In einer bevorzugten Ausführungsform wird dies dadurch erreicht, dass der Spalt möglichst nahe über der zu beschichteten Oberfläche direkt bei dem Nivellierelement angebracht ist. Der Spalt kann dann so dimensioniert werden, dass bei aktiviertem Vibrationsmechanismus relativ viel Partikelmaterial ausgestoßen wird. Bei der Beschichterfahrt häuft sich das Partikelmaterial so weit an, bis es die Dosieröffnung erreicht. Durch das angehäufte Partikelmaterial wird nun weiteres Material daran gehindert aus dem Vorrat durch die Öffnung auszutreten. Auf diese Weise lässt sich ohne aufwendige Justagearbeiten an der Spalthöhe eine konstante Pulvermenge vor dem Nivellierelement erzielen.

Ein solches selbst-einstellendes System hat einen wesentlichen Vorteil gegenüber den bekannten Beschichtungsverfahren, da keine genaue Justierung der Öffnung notwendig ist. Dies ist insbesondere bei sehr breiten Öffnungen sehr aufwendig.

Das Nivellierelement glättet und verdichtet das aufgetragene Material. Vorzugsweise wird eine in der Neigung veränderbare Klinge mit eine bestimmten Auflagelänge gewählt. Über die Neigung der Auflagefläche zur Beschichtungsoberfläche lässt sich die Verdichtung der Schicht gut einstellen.

Die Klinge weist gemäß einer bevorzugten Ausführungsform verrundete Kanten auf. Auf diese Weise wird eine Beschädigung der aufgetragenen Schichtoberfläche vermieden. Die Verrundungen haben dabei vorzugsweise einen Radius von 0,2 bis 1 mm.

Der Beschichter, der mindestens aus einem Dosiersystem und dem Nivellierelement besteht, wird durch einen Oszillator zum schwingen angeregt. Die Schwingung geschieht vorteilhafterweise hauptsächlich in Beschichtungsrichtung. Es ist jedoch auch möglich das System mit einer zusätzlichen vertikalen Komponente schwingen zu lassen, um so eine noch höhere Verdichtung des Partikelmaterials zu erzielen. Jedoch muss beachtet werden, dass eine zu starke Verdichtung des Partikelmaterials zu einer Bewegung im Pulverbett über die aktuelle Schicht hinaus führen kann und somit zu einer Zerstörung der darin gedruckten Struktur führt.

Über die Frequenz und Amplituden (horizontal und vertikal) des Oszillators kann zum einen die Verdichtung und zum anderen die Auswurfmenge des Dosiersystems eingestellt werden.

Wie bereits angesprochen eignet sich die erfindungsgemäße Beschichtungsvorrichtung besonders für die Verwendung von sehr feinen Partikelmaterialien (von Korngrößen < 150 µm), wie sie bei den gängigen Rapid-Prototyping-Verfahren, wie dem beispielsweise aus der EP 0 431 924 bekannten 3D-Printing oder selektivem Lasersintern, verwendet werden. Bei diesen Verfahren entscheidet die Körnung der Partikelmaterials über die mögliche Schichtdicke und somit über die Genauigkeit und Auflösung der gedruckten Teile.

Im Unterschied zu Verfahren des Standes der Technik können sowohl Partikelmaterialien mit abgerundeten Körnen und damit hoher Fließfähigkeit als auch Pulver mit kantigen Partikeln und geringerer Fließfähigkeit verarbeitet werden. Durch die Fluidisierung des Partikelmaterials im Dosiersystem ergibt sich in beiden Fällen ein homogenes Beschichtungsergebnis.

Mit dem erfindungsgemäßen Verfahren können Kunststoffpartikelmaterialien wie z.B. PMMA, PA oder PS, unterschiedlichste Metallpulver sowie auch Formsande wie Quarzsand, Zirkonsand, Magnetit oder Chromerzsand verarbeitet werden. Die Wahl des Werkstoffes hängt ausschließlich vom gewählten Schichtbauverfahren und den Eigenschaften des Zielwerkstoffes ab.

Die Partikelmaterialien können homogen oder als Partikelmischung bzw. gecoatete Pulver vorliegen. Es ist auch denkbar, dass dem Partikelmaterial vor dem Beschichtungsvorgang andere Stoffe in Form von Flüssigkeiten zugemischt werden.

Andere Pulvermischungen enthalten zum Beispiel Fasermaterialien zur späteren Verstärkung des Bauteils.

Weitere vorteilhafte Ausgestaltungen der vorliegenden Erfindung ergeben sich aus den Unteransprüchen sowie der Beschreibung.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 die Abfolge eines erfindungsgemäßen Verfahrens gemäß einer bevorzugten Ausführungsform; und
Figur 2 die erfindungsgemäße Vorrichtung gemäß einer bevorzugten Ausführungsform.

Beispielhaft soll im Folgenden das erfindungsgemäße Verfahren und die erfindungsgemäße Vorrichtung für den Einsatz beim schichtweisen Aufbau von Gussmodellen aus Partikelmaterial und Bindemittel bei einem Rapid-Prototyping-Verfahren erläutert werden.

Insbesondere soll dabei von sehr feinen und fließfähigen Partikelmaterial ausgegangen werden, das üblicherweise bei solchen Rapid-Prototyping-Verfahren eingesetzt wird.

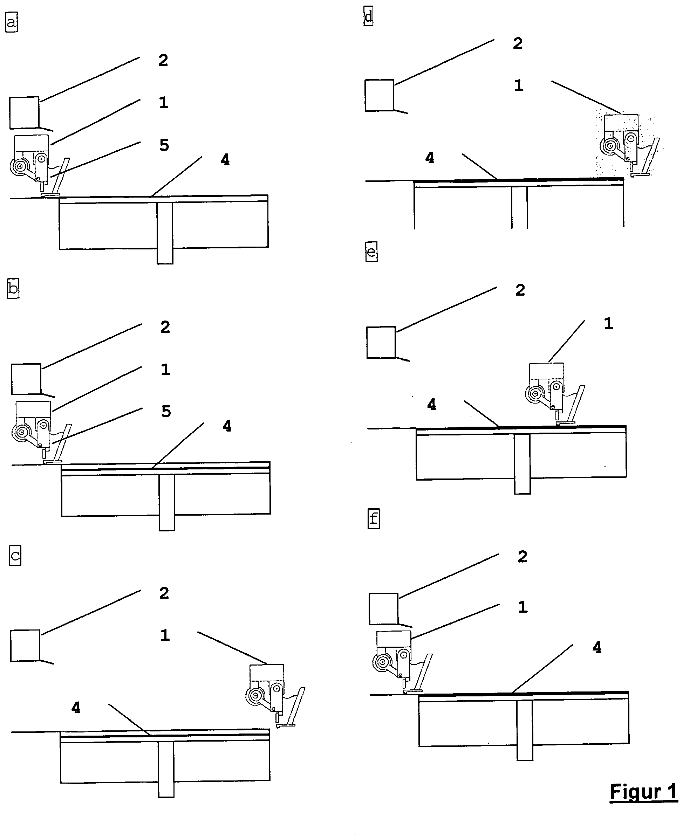

Bezugnehmend auf Figur 1 wird im Folgenden die Abfolge der Beschichtung gemäß einer bevorzugten Ausführungsform des erfindungsgemäßen Verfahrens beschrieben.

Bei einem Aufbauverfahren eines Bauteiles, wie beispielsweise eines Gussmodells, wird eine Bauplattform 4, auf der das Modell aufgebaut werden soll, um eine Schichtstärke des Partikelmaterials 5 abgesenkt. Danach wird das Partikelmaterial 5, beispielsweise sehr feines Kunststoffpulver in einer gewünschten Schichtstärke aus einem Behälter, hier einem Trichter, auf die Bauplattform 4 aufgetragen. Danach schließt sich das selektive Auftragen von Bindemittel auf auszuhärtende Bereiche an. Dies kann beispielsweise mittels eines Drop-on-demand-Tropfenerzeugers, nach Art eines Tintenstrahldruckers, durchgeführt werden. Diese Auftragungsschritte werden wiederholt, bis das fertige Bauteil, eingebettet in loses Partikelmaterial 5 erhalten wird.

Am Anfang steht der Beschichter 1 in der Ausgangslage, was in Figur 1a dargestellt ist. Er wird zunächst über eine Befüllvorrichtung 2 befüllt, wenn der Füllstandssensor ein Unterniveau in einem Behälter, der hierbei als Trichter ausgebildet ist, erkannt hat.

Wie in Figur 1b dargestellt ist, wird im Folgenden zum Aufbau eines Modells die Bauplattform 4 um mehr als eine Schicht abgesenkt.

Danach fährt der Beschichter 1, wie in Figur 1c gezeigt, ohne Oszillationsbewegung und damit ohne Förderwirkung in die Position gegenüber der Befüllvorrichtung 2, bis er über dem Rand der Bauplattform 4 steht.

Nun wird die Bauplattform 4 genau auf Schichthöhe angehoben, was aus Figur 1d ersehen werden kann. Das heißt, dass die Bauplattform 4 nun genau um eine Schichthöhe abgesenkt ist.

Jetzt beginnt der Beschichter 1 zu oszillieren und fährt in konstanter Fahrt über die Bauplattform 4. Dabei gibt er Partikelmaterial 5 in genau der richtigen Menge ab und beschichtet die Bauplattform 4. Dies ist in Figur 1e gezeigt.

Die Verfahrgeschwindigkeit des Beschichters beträgt dabei ohne Einschränkung zwischen 10 und 200 mm/s. Die wählbare Beschichtungsgeschwindigkeit hängt maßgeblich von der ausgestoßenen Partikelmenge und der Beweglichkeit der Einzelpartikel ab. Bei im Verhältnis zum Partikelausstoß zu groß gewählter Verfahrgeschwindigkeit, bilden sich Fehlstellen im Pulverbett aus, die im schlimmsten Fall zur Delamination des Bauteils führen können. Generell sind jedoch aus Produktivitätsgründen höhere Beschichtungsgeschwindigkeiten vorteilhaft.

Eine ungünstige Konstellation von Verfahrgeschwindigkeit zu Oszillationsbewegung des Nivellierelementes führt zu sogenannten Rattermarken an der Pulverbettoberfläche, die die Bauteilqualität negativ beeinflussen. Generell gilt, je höher die Beschichtungsgeschwindigkeit gewählt wird, desto höher sollte die Schwingfrequenz am bewegten Nivellierelement sein.

Der Beschichter 1 fährt nach der Beschichtungsfahrt ohne Schwingbewegung in Eilfahrt, das heißt möglichst schnell, zur Ausgangsposition zurück und kann bei Bedarf über die Befüllvorrichtung 2 neu befüllt werden. Dies ist in Figur 1f gezeigt, die der Figur 1a entspricht.

Um eine ungleichmäßige Befüllung des Beschichters 1 über seine Länge auszugleichen, kann nach einer bestimmten Zeit der Trichter über dem Abfallbehälter 6 durch Oszillation des Trichters im Stand entleert und anschließend wieder befüllt werden.

Der Druckprozess, bzw. Belichtungsprozess zum Härten des mit Bindemittel versehenen Partikelmaterials 1 kann schon während oder auch nach dem Beschichten erfolgen.

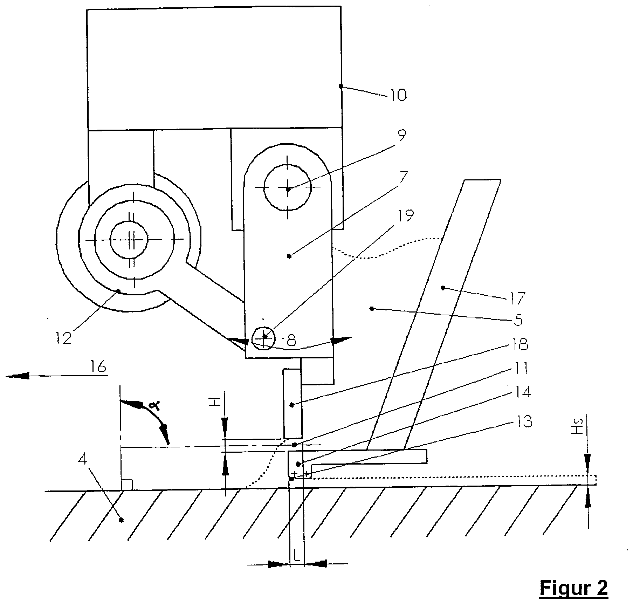

Die Figur 2 zeigt eine erfindungsgemäße Vorrichtung nach einer bevorzugten Ausführungsform.

Insbesondere auch zur Durchführung des erfindungsgemäßen Verfahrens eignet sich eine Vorrichtung gemäß der gezeigten bevorzugten Ausführungsform.

Es wird gemäß der Figur 2 Partikelmaterial 5 auf einen zu beschichtenden Bereich aufgetragen, wobei eine Schwinge 7, die eine Dosiervorrichtung beinhaltet, in Vorwärtsbewegungsrichtung 16 der Klinge 14 gesehen Partikelmaterial 5 auf die Bauplattform 4 aufträgt. Weiterhin ist als Nivellierelement eine Klinge 14 vorgesehen, die das aufgetragene Material verdichtet, glättet und für eine konstante Schichtdicke H_{S} des aufgetragenen Partikelmaterials 5 sorgt.

Die Schwinge 7 ist gemäß der gezeigten bevorzugten Ausführungsform derart an den Beschichterhauptträger 10 angebracht, dass sie eine Schwingung nach Art einer Drehbewegung die durch den Pfeil 8 angedeutet ist, durchführen kann. Der Beschichterhauptträger 10 erstreckt sich hierbei gemäß einer bevorzugten Ausführungsform über die gesamte Breite der Bauplattform 4. Die Drehachse 9 der Schwinge 7 liegt gemäß dieser gezeigten bevorzugten Ausführungsform senkrecht zur durch den Pfeil 16 dargestellten Verfahrbewegung und parallel zur Längsachse der Schwinge 7.

Die Dosiervorrichtung beinhaltet im vorliegenden Fall einen Behälter, einen trichterförmigen Partikelvorrat, der durch die Schwinge 7 und ein entsprechendes Blech 17 gebildet wird, und weist einen Dosierspalt auf, der sich in dem Behälter, der hier die Form eines Trichters aufweist, seitlich, das heißt in Richtung senkrecht zur Beschichtungsrichtung gesehen mit einem Winkel α dazu und in Fahrtrichtung vor und oberhalb der Abstreiferklinge 14 befindet. Gemäß der Zeichnung beträgt α hier ungefähr 90°. Dies soll jedoch nur als Beispiel dienen.

Das Blech 17 und die Klinge 14 sind derart angeordnet, dass die Spalthöhe H und Spaltlänge L der als Spalt ausgestalteten Öffnung 11 derart bemessen ist, dass bei deaktiviertem Vibrationsmechanismus kein Partikelmaterial 5 aus dem Vorrat austritt und bei aktiviertem Vibrationsmechanismus mehr Partikelmaterial 5 ausgeworfen wird, als für das Auslegen der komprimierten Schicht benötigt wird. Die Höhe des Spaltes 11 kann mittels des Riegels 18 eingestellt werden.

Das überschüssige Material sammelt sich vor der Klinge 14. Erreicht das überschüssige Partikelmaterial 5 vor der Klinge 14 die Öffnung 11, die hier als Spalt ausgebildet ist, wird weiteres Partikelmaterial 5 am Austreten aus der Öffnung 11 gehindert. Auf diese Weise stellt sich bei der Beschichterfahrt entlang der Klinge 14 eine gleichmäßig große Ansammlung von Partikelmaterial 5 vor der Klinge 14 ein. Das führt zu einem gleichmäßigen Beschichtungsergebnis über die gesamte Breite des Beschichters und über die gesamte Länge des Baufeldes 4.

Die Schwinge 7 mit der fest verbundenen beziehungsweise enthaltenden Dosiereinrichtung und Klinge 14 bewegt sich bei der Oszillationsbewegung gemäß dem Pfeil 8 um die Drehachse 9. Dabei wird zum einen eine Bewegung in Fahrtrichtung ausgeführt. Durch eine andere Anordnung der Drehachse 9 kann aber auch eine Bewegung mit einem zusätzlichen Vertikalanteil realisiert werden, um eine dadurch erreichte vertikale Bewegung der Klinge 14 einen zusätzlichen Komprimierungseffekt der aufgetragenen Schicht zu erzielen.

Die Auslenkung der Schwinge 7 kann durch die Größe des Exzenters 12 und dessen Verbindungspunkt 19 mit der Schwinge 7 so eingestellt werden, dass die Amplitude der Bewegung der Klinge 14 zwischen 0,05 und 1 mm liegt.

Die Amplitude und Frequenz der Schwingung werden dabei so angepasst, dass eine ausreichende Komprimierung der Partikelschicht stattfindet und ausreichend Partikelmaterial 5 durch das Dosiersystem gefördert wird. Dabei sind die Amplitude und die Schwingungsrichtung so zu wählen, dass keine Beschädigung des unter der Schicht liegenden Bereichs eintritt.

Die Vorrichtung ist gemäß der gezeigten Ausführungsform auch derart ausgestaltet, dass ein Antrieb des Beschichters 4 über zumindest einen schnell laufenden Elektromotor, der über einen Exzenter 12 die Schwinge 7 zum Schwingen bringt, erfolgt.

Der verwendete Motor zum Antreiben des Exzenters 12 hat hierbei beispielsweise eine Nenndrehzahl bei 12 V von 3000 U/min, der Hub des Exzenters 12 beträgt 0,15 mm, was gemäß dem beschriebenen Beispiels einer Amplitude an der Spitze der Klinge 14 von 0,20 mm entspricht. Bei 15 V wurde eine Drehzahl von 4050 U/min gemessen. Dieser Wert entspricht 67,5 Hz. Je nach Breite der Klinge 7 kann es notwendig sein, mehrere Anlenkungspunkte vorzusehen.

Die Klinge 14 weist weiterhin verrundete Kanten 13 auf. Auf diese Weise wird eine Beschädigung der aufgetragenen Schichtoberfläche vermieden. Die Verrundungen haben vorzugsweise einen Radius von 0,2 bis 1 mm.

## Patentansprüche

1. Verfahren zum Auftragen von Partikelmaterialien (5) auf einen zu beschichtenden Bereich (4), wobei in Vorwärtsbewegungsrichtung des Beschichters (1) gesehen, das Partikelmaterial (5) auf den zu beschichtenden Bereich aufgetragen wird und danach ein Nivellierelement (14) über dem aufgetragenen Partikelmaterial (5) verfahren wird, wobei das Partikelmaterial (5) aus einem mit einer Öffnung (11) versehenen Dosiersystem zugeführt wird, das zumindest beim Auftragen des Partikelmaterials eine Schwingung ausführt,
**dadurch gekennzeichnet, dass** die Öffnung (11) seitlich, das heißt senkrecht zur Beschichtungsrichtung gesehen mit einem Winkel α und in Fahrtrichtung vor und oberhalb der Abstreifklinge (14) am Dosiersystem vorgesehen ist und bei Stillstand des Dosiersystems durch Schüttkegelbildung des Partikelmaterials (5) in der Öffnung (11) verschlossen und bei aktivierter Schwingung der Schüttkegel zusammenbricht und Partikelmaterial wieder ausgefördert wird.

2. Verfahren nach Anspruch 1,
wobei die Schwingung horizontale oder/und vertikale Komponenten aufweist oder/und nach Art einer Drehbewegung (8) erfolgt.

3. Verfahren nach Anspruch 1 oder 2,
wobei das Nivellierelement (14) mit dem Dosiersystem die Schwingung durchführt.

4. Verfahren nach einem der vorhergehenden Ansprüche, wobei eine Dosiermenge des Partikelmaterials (5) stets in kleinerer Menge als dem im Dosiersystem zur Verfügung stehenden Restvolumen erfolgt.

5. Verfahren nach einem der vorhergehenden Ansprüche, wobei eine Einstellung der Höhe des Partikelmaterials senkrecht zum zu beschichtenden Bereich mittels Nivellierelement (14) erfolgt.

6. Verfahren nach einem der vorhergehenden Ansprüche, wobei ein Schichtaufbau des zu beschichtenden Bereichs (4) durch wiederholtes Auftragen des Partikelmateriales erfolgt.

7. Verfahren nach einem der vorhergehenden Ansprüche, wobei die Drehbewegung (8) über Exzenter (12) erzielt wird.

8. Verfahren nach einem der vorhergehenden Ansprüche, wobei der Winkel α 90° beträgt.

9. Vorrichtung zum Auftragen von Partikelmaterialien (5), insbesondere bei einem Verfahren nach einem der vorhergehenden Ansprüche, auf einen zu beschichtenden Bereich (4), wobei ein Nivellierelement (14) und in Vorwärtsbewegungsrichtung des Nivellierelementes (14) gesehen eine Dosiervorrichtung vorgesehen ist, mittels der auf den zu beschichtenden Bereich Partikelmaterial aufgetragen werden kann und die Klinge (14) über dem aufgetragenen
Partikelmaterial (5) verfahrbar ist, wobei die Dosiervorrichtung mit einer Öffnung (11) versehenen ist und eine Schwingung ausführen kann,
wobei die Öffnung (11) derart vorgesehen ist, dass sie bei Stillstand des Dosiersystems durch Schüttkegelbildung des Partikelmaterials (5) in der Öffnung (11) verschließbar ist und bei aktivierter Schwingung der Schüttkegel zusammenbricht und Partikelmaterial wieder ausförderbar ist, **dadurch gekennzeichnet, dass** die Öffnung (11) seitlich, das heißt senkrecht zur Beschichtungsrichtung gesehen mit einem Winkel α und in Fahrtrichtung vor und oberhalb der Abstreifklinge (14) am Dosiersystem vorgesehen ist.

10. Vorrichtung nach Anspruch 9,
wobei das Nivellierelement (14) mit dem Dosiersystem verbunden ist.

11. Vorrichtung nach Anspruch 9 oder 10,
wobei das Nivellierelement (14) einen Teil des Dosiersystems bildet.

12. Vorrichtung nach einem der Ansprüche 9 bis 11,
wobei das Dosiersystem im Wesentlichen trichterförmig ausgestaltet ist.

13. Vorrichtung nach einem der Ansprüche 9 bis 12,
wobei das Dosiersystem einen Füllstandssensor aufweist.

14. Vorrichtung nach einem der Ansprüche 9 bis 13, wobei der Winkel α 90° beträgt.

15. Verwendung der Vorrichtung nach einem der Ansprüche 9 bis 14 zum Auftragen von sehr feinem Partikelmaterial (5), insbesondere Kunststoffpartikelmaterial, Metallpulver oder Formsand.

16. Verwendung der Vorrichtung nach einem der Ansprüche 9 bis 15 bei einem Verfahren zum Aufbau von Modellen.

17. Verwendung der Vorrichtung nach einem der Ansprüche 9 bis 16 bei einem Verfahren zum Aufbau von Formen.

## Claims

1. A method for applying particulate materials (5) onto an area (4) to be coated, wherein the particulate material (5), as viewed in the forward movement direction of the coater (1), is applied onto the area to be coated and then a leveling element (14) is moved over the applied particulate material (5), said particulate material (5) being supplied from a metering system, which comprises an opening (11) and performs an oscillation at least when applying the particulate material,
**characterised in that** the opening (11), when viewed laterally, i.e. perpendicular to the coating direction, is provided on the metering system at an angle a, as well as forward of and above the leveling element (14) in the direction of travel and is closed by a material cone of the particulate material (5) forming in the opening (11) upon standstill of the metering system, and activating the oscillation causes the material cone to collapse and allows particulate material to be discharged again.

2. The method according to claim 1,
wherein said oscillation comprises horizontal or/and vertical components or/and is carried out in the manner of a rotary motion (8).

3. The method according to claim 1 or 2,
wherein the leveling element (14) performs the oscillation with the metering system.

4. The method according to any one of the preceding claims,
wherein a dosing quantity of the particulate material (5) is always smaller than the residual volume available in the metering system.

5. The method according to any one of the preceding claims,
wherein a height adjustment of the particulate material is performed by means of the leveling element (14) perpendicular to the area to be coated.

6. The method according to any one of the preceding claims, wherein layered construction of the area (4) to be coated is effected by repeated application of the particulate material.

7. The method according to any one of the preceding claims, wherein the rotary motion (8) is achieved via eccentrics (12).

8. The method according to any one of the preceding claims,
wherein the angle α is 90°.

9. A device for applying particulate materials (5), in particular in a method according to anyone of the preceding claims, onto an area (4) to be coated, said device being provided with a leveling element (14) and, viewed in the forward movement direction of the leveling element (14), with a metering device by means of which particulate material can be applied onto the area to be coated and the leveling element (14) can be moved over the applied particulate material (5),
wherein said metering device is provided with an opening (11) and can execute an oscillation,
wherein said opening (11) is provided such that it can be closed by a material cone of the particulate material (5) forming in the opening (11) upon standstill of the metering system, and activating the oscillation causes the material cone to collapse and allows particulate material to be evacuated again,
**characterised in that** the opening (11), when viewed laterally, i.e. perpendicular to the coating direction, is provided on the metering system at an angle α, as well as forward of and above the leveling element (14) in the direction of travel.

10. The device according to claim 9,
wherein the leveling element (14) is connected to the metering system.

11. The device according to claim 9 or 10,
wherein the leveling element (14) forms part of the metering system.

12. The device according to any one of claims 9 to 11,
wherein the metering system is substantially funnel-shaped.

13. The device according to any one of claims 9 to 12,
wherein the metering system comprises a fill level sensor.

14. The device according to any one of claims 9 to 13, wherein the angle a is 90°.

15. Use of the device according to any one of claims 9 to 14 for applying very fine particulate material (5), in particular plastic particulate material, metal powder or moulding sand.

16. Use of the device according to any one of claims 9 to 15 in a method for the construction of models.

17. Use of the device according to any one of claims 9 to 16 in a method for the construction of moulds.

## Revendications

1. Procédé d'application de matériaux particulaires (5) sur une région à enduire (4), dans lequel ledit matériau particulaire (5), vu dans la direction d'avancement de l'enducteur (1), est appliqué sur la région à enduire et ensuite un élément de nivellement (14) est déplacé sur le matériau particulaire (5) appliqué, ledit matériau particulaire (5) étant amené par un système de dosage qui présente un orifice (11) et qui effectue une oscillation au moins lors de l'application du matériau particulaire, **caractérisé en ce que** l'orifice (11), en vue latérale, c'est à dire perpendiculairement à la direction de revêtement, est disposé sur le système de dosage à un angle a, ainsi qu'en avant et au-dessus dudit élément de nivellement (14), dans la direction de marche, et est fermé par un cône du matériau particulaire (5) se formant dans l'orifice (11) lorsque le système de dosage s'arrête, et une activation de l'oscillation fait le cône de matériau s'effondre et permet encore une fois le décharge de matériau particulaire.

2. Procédé selon la revendication 1,
dans lequel ladite oscillation comporte des composantes horizontales ou/et verticales ou/et est effectuée à la manière d'un mouvement rotatif (8).

3. Procédé selon la revendication 1 ou 2,
dans lequel l'élément de nivellement (14) effectue l'oscillation avec le système de dosage.

4. Procédé selon l'une quelconque des revendications précédentes,
dans lequel une quantité de dosage dudit matériau particulaire (5) est toujours inférieure au volume résiduel disponible dans le système de dosage.

5. Procédé selon l'une quelconque des revendications précédentes,
dans lequel le réglage du niveau du matériau particulaire est effectué, perpendiculairement à la région à enduire, au moyen de l'élément de nivellement (14).

6. Procédé selon l'une quelconque des revendications précédentes, dans lequel la construction couche par couche de la région à enduire (4) s'effectue par application répétée du matériau particulaire.

7. Procédé selon l'une quelconque des revendications précédentes, dans lequel le mouvement rotatif (8) est réalisé par des excentriques (12).

8. Procédé selon l'une quelconque des revendications précédentes,
dans lequel l'angle a est de 90°.

9. Dispositif d'application de matériaux particulaires (5), notamment dans un procédé selon l'une quelconque des revendications précédentes, sur une région à enduire (4), dans lequel on prévoit un élément de nivellement (14) et, vu dans la direction d'avancement de l'élément de nivellement (14), un dispositif de dosage permettant d'appliquer du matériau particulaire sur la région à enduire et de déplacer l'élément de nivellement (14) sur le matériau particulaire (5) appliqué,
le dispositif de dosage comportant un orifice (11) et pouvant effectuer une oscillation, l'orifice (11) étant disposé de manière à pouvoir être fermé par un cône du matériau particulaire (5) se formant dans l'orifice (11) lorsque le système de dosage s'arrête, et une activation de l'oscillation fait le cône de matériau s'effondre et permet encore une fois le décharge de matériau particulaire,
**caractérisé en ce que** l'orifice (11), en vue latérale, c'est à dire perpendiculairement à la direction de revêtement, est disposé sur le système de dosage à un angle a, ainsi qu'en avant et au-dessus dudit élément de nivellement (14), dans la direction de marche.

10. Dispositif selon la revendication 9,
dans lequel l'élément de nivellement (14) est relié au système de dosage.

11. Dispositif selon la revendication 9 ou 10,
dans lequel l'élément de nivellement (14) fait partie du système de dosage.

12. Dispositif selon l'une quelconque des revendications 9 à 11,
dans lequel le système de dosage est sensiblement en forme d'entonnoir.

13. Dispositif selon l'une quelconque des revendications 9 à 12,
dans lequel le système de dosage comporte un capteur de niveau de remplissage.

14. Dispositif selon l'une quelconque des revendications 9 à 13, dans lequel l'angle a est de 90°.

15. Utilisation du dispositif selon l'une quelconque des revendications 9 à 14 pour appliquer du matériau particulaire (5) très fin, notamment du matériau plastique particulaire, de la poudre métallique ou du sable de moulage.

16. Utilisation du dispositif selon l'une quelconque des revendications 9 à 15 dans un procédé pour la construction de modèles.

17. Utilisation du dispositif selon l'une quelconque des revendications 9 à 16 dans un procédé pour la construction de moules.
